(19) Europäisches Patentamt / European Patent Office / Office européen des brevets

(11) **EP 2 789 880 B1**

(12) **EUROPEAN PATENT SPECIFICATION**

(45) Date of publication and mention
of the grant of the patent:
**01.07.2020 Bulletin 2020/27**

(51) Int Cl.:
***F16H 61/02*** *(2006.01)*     *F16H 59/14* *(2006.01)*
***F16H 61/16*** *(2006.01)*

(21) Application number: **14163789.2**

(22) Date of filing: **08.04.2014**

(54) **Gear change with predicted engine speed**

Gangwechsel mit vorhergesagter Motordrehzahl

Procédé de commande de la vitesse avec prédiction de la vitesse du moteur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2013 SE 1350453**

(43) Date of publication of application:
**15.10.2014 Bulletin 2014/42**

(73) Proprietor: **Scania CV AB**
**151 87 Södertälje (SE)**

(72) Inventors:
• **Asplund, Peter**
**647 30 Mariefred (SE)**
• **Wågberg, Mikael**
**151 44 Södertälje (SE)**

(74) Representative: **Scania CV AB**
**Patents, GP 117kv**
**151 87 Södertälje (SE)**

(56) References cited:
**US-A1- 2006 155 450**

**Description**

TECHNICAL FIELD OF THE INVENTION

The invention concerns a method and a control unit in a vehicle. More specifically, the invention concerns a method for shifting gears of a transmission in a vehicle.

BACKGROUND

US 2006/0155450 A1 discloses a method for controlling selection of an automatic transmission gear ratio. The method ensures that the power that can be delivered by a motive power group at a current ratio is always higher than a threshold representative of the resisting load plus a margin. This makes it possible to ensure that a speed setpoint is maintained. A hunting problem between two adjacent gears, that develops when the power available at the current ratio is insufficient to compensate for the resisting load, is eliminated. Oscillating gear shifts which could occur due to small fluctuations of the resisting load are overcome by a hysteresis introduced by establishing a first and a second threshold.

When shifting gears in a vehicle, and perhaps particularly when shifting under slightly more difficult conditions, such as a heavy load and/or when driving uphill, it can be difficult for the vehicle driver, particularly if he is unaccustomed, to know whether or not it is possible to shift gears.

The problem applies not only to manual shifting but also, or perhaps primarily, to automatic shifting by means of an automatic transmission.

In heavy vehicles, such automatic shifting often consists of a control system-controlled shifting of "manual" transmissions, also known as AMT (Automated Manual Transmission), e.g. because they are significantly less expensive to fabricate, but also because of their higher efficiency compared to traditional automatic transmission. They are also of lower weight. As a result, automatically shifted AMT transmissions are usually used in heavy vehicles that are used largely for highway/motorway use.

Vehicles refer in this context to, for example, goods vehicles, long-haul vehicles, flatbed trucks, vans, trucks, campers, pickups, work vans, cars, emergency vehicle, watercraft, combi vans, four-wheelers, scooters, excavating machinery vehicles, crane trucks, tanker trucks, wheel-loaders, motorcycles, radio vans, mopeds, scooters, limousines, sno-cats, sports cars, racing cars, lawnmowers, tanks, busses, combine harvesters, agricultural machinery, all-terrain vehicles, snowmobiles, tracked vehicles, go-karts, tractors or other similar motorized manned or unmanned means of conveyance adapted for land-based geographical travel.

The problem is that, during the shifting process, the engine lacks tractive force in the direction of travel, and consequently loses a great deal of speed, particularly when the vehicle is being driven uphill and/or is heavily loaded. As a result, the rpm of the new gear can be too low following the shift, which in turn results in the engine generating such low torque that the vehicle is unable to cope and the engine stalls.

This phenomenon is also known among, for example, driving school students who slow down as they approach an intersection and may then be so focused on the surrounding traffic that they forget to downshift, which can result in the engine stalling in the middle of the intersection because the engine rpm falls too low.

Such sudden engine stalls can result in an increased risk of accident, as surrounding/trailing drivers may be surprised and unable to grasp the situation in time to brake. Unwarranted engine stalls can also cause increased irritation and trigger adrenalinfueled unconventional passing by surrounding drivers, which can further increase the risk of accident.

To avoid falling victim to an embarrassing engine stall, the driver may choose to constantly drive in a cowardly fashion in too low a gear and at too high an rpm. However, this leads to increased fuel consumption, which results in higher shipping costs and greater environmental impact. An unnecessarily high engine rpm also creates a risk of mistreating the vehicle driver ergonomically as a result of increased engine noise and vibrations in the vehicle.

It is clear that a great deal remains to be done to reduce the risk of accident and at the same time decrease fuel consumption in connection with shifting of gears in a vehicle.

SUMMARY

One object of the present invention is consequently to solve at least one of the foregoing problems, improve the method used in shifting gears in a vehicle, and thereby achieve an improvement of the vehicle.

According to a first aspect of the invention, this object is achieved by means of a method for shifting gears in a vehicle. The method comprises determining that the rpm level of the vehicle engine is within an rpm range for engaging a new gear. The method further comprises predicting, by simulating the shift of gears, what the lowest rpm would be after shifting to the new gear, were the shift of gears to be made. The method also comprises calculating a threshold rpm at which the vehicle engine will generates a propulsive force corresponding to the running resistance of the vehicle. The method further comprises preventing the shift to the new gear if the predicted lowest rpm is below the calculated threshold rpm.

According to another aspect of the invention, this object is achieved by means of a control unit arranged so as to control the shifting of gears of a transmission in a vehicle. The control unit comprises a receiving circuit arranged so as to retrieve the instantaneous rpm level of the vehicle engine. The control unit further comprises a processor circuit arranged so as to determine that the gathered instantaneous rpm level is within an rpm range for engaging a new gear, a shift point. The processor circuit contained in the control unit is also arranged so as to predict, by simulating the shift o gears, what the lowest rpm would be after shifting to the new gear, were the shift to be performed. The processor circuit is also arranged so as to calculate a threshold rpm at which the vehicle engine will generate a propulsive force corresponding to the running resistance of the vehicle. The processor circuit is further arranged so as to generate a control signal to prevent shifting to the new gear from being performed when the predicted lowest rpm is below the calculated threshold rpm. The control unit also contains a transmitting circuit arranged so as to transmit a control signal to prevent shifting to the new gear from being performed if the predicted lowest rpm is below the calculated threshold rpm.

An unsuccessful attempt to shift gears can be avoided by simulating a shifting process and predicting what the lowest rpm would be were a shift to be performed and then comparing the predicted lowest rpm to a calculated threshold rpm at which the vehicle engine is generating a propulsive force corresponding to the running resistance of the vehicle.

An engine stall resulting from engaging a gear that is too high can thus be avoided. Driving the vehicle in an unnecessarily low gear can also be avoided, with the result that the vehicle can be driven at a lower engine rpm, which results in reduced fuel consumption and lower fuel costs. An improved vehicle is obtained thereby.

Other advantages and additional new features will be presented in the detailed description of the invention below.

LIST OF FIGURES

The invention will now be described in grater detail with reference to the accompanying figures, which illustrates embodiments of the invention:

Figure 1A     is an illustration of a vehicle according to one embodiment of the invention.

Figure 1B     is an illustration of a vehicle according to one embodiment of the invention.

Figure 1C     is an illustration of rpm and engine torque in a vehicle according to one embodiment of the invention.

Figure 2     is a combined flow diagram and signaling diagram according to one embodiment of the invention.

Figure 3     is a flow diagram that illustrates one embodiment of a method for shifting gears in a vehicle.

Figure 4     is an illustration of a control unit for shifting gears in a vehicle according to one embodiment of the invention.

DETAILED DESCRIPTION OF THE INVENTION

The invention is defined as a method and a control unit, which can be realized in any of the embodiments below. This invention can, however, be realized in many different forms, and is not to be viewed as being limited by the embodiments described herein, which are intended rather to elucidate and clarify various aspects of the invention.

Additional aspects and features of the invention may be apparent from the following detailed description when it is considered in combination with the accompanying figures. However, the figures are to be viewed only as examples of different embodiments of the invention, and are not to be viewed as limiting the invention, which is limited solely by the accompanying claims. Furthermore, the figures are not necessarily drawn to scale and are, unless otherwise indicated, intended to illustrate aspects of the invention conceptually.

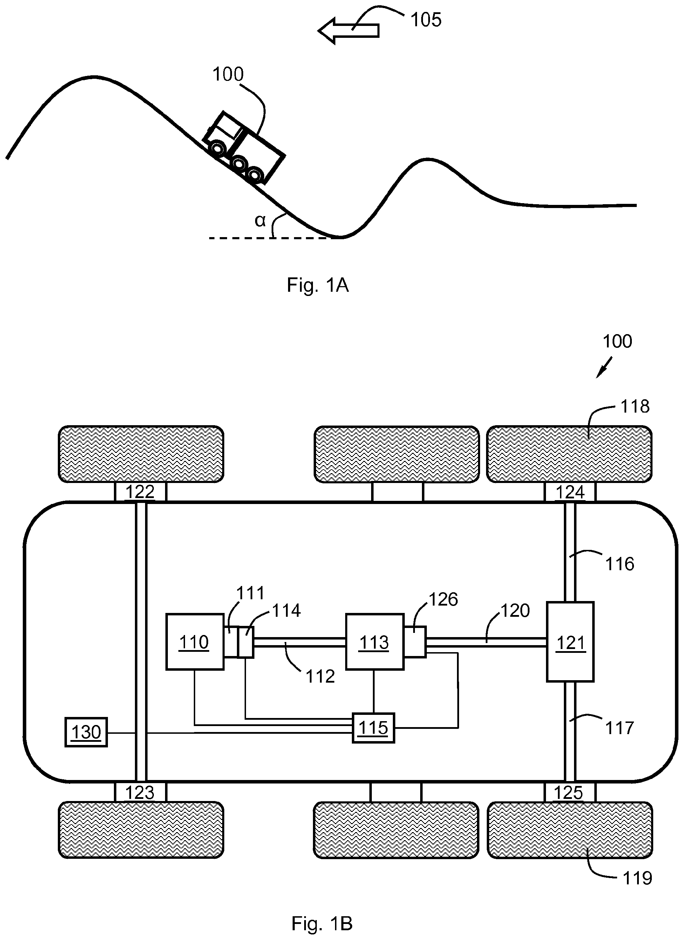

Figure 1A shows a vehicle 100 adapted for gear shifting and engine-powered travel in, among others, a first direction of travel 105. The vehicle 100 in the figure finds itself in a situation involving an uphill stretch with an slope $\alpha$ and loaded with a heavy load, wherein it can difficult on the one hand to decide whether a shift to a higher gear is feasible, as the vehicle velocity will be reduced rapidly during the shift, and the rpm immediately after the shift to the new gear may be too low for the engine to be able to generate sufficient propulsive force. On the other hand, the vehicle 100 can probably reduce its fuel consumption, lower its emissions and generate less engine noise and vibrations if a higher gear can be engaged on the uphill stretch.

Figure 1B schematically depicts a driveline in the vehicle 100 according to one embodiment of the present invention. The driveline comprises a combustion engine 100 which, via an output shaft from the combustion engine 110, e.g. via a flywheel, is connected with an input shaft 112 of a transmission 113 via a clutch. A sensor 111 can be arranged separately so as to read off the combustion engine rpm on the output shaft. The transmission 113 can be a manual transmission, an automatic transmission or an automated manual transmission (AMT) in different embodiments.

The clutch 114 can, for example, consist of an automatically controlled clutch, which can be, for example, of the dry plate type. The engagement of the friction element (the plate) with the output shaft of the engine can be controlled by means of a pressure plate, which can be laterally displaceable with the help of, for example, a rocker arm, whose function can be controlled by a clutch actuator. The action of the clutch actuator on the rocker arm is in turn controlled by the vehicle clutch control system via a control unit 15. The control unit 115 also controls the transmission 113.

The control algorithm that controls the vehicle transmission 113 is influenced by one or a plurality of various parameters, which can be driver-dependent, indirectly driver-dependent or driver-independent, such as the vehicle inclination, vehicle weight, vehicle type, driving comfort, the position of the gas pedal, the rate of change of the gas pedal position, the chosen performance, vehicle velocity and/or engine rpm, to name just a few.

The vehicle 100 also contains drive shafts 116, 117, which are connected to the engine drive wheels 118, 119, and which are powered from the output shaft 120 of the transmission 113 via an axle gear 121, such as a differential gear. The vehicle 100 schematically depicted in Figure 1B comprises only two drive wheels 118, 119, but embodiments of the invention are also applicable to vehicles 100 with a plurality of drive shafts equipped with one or a plurality of drive wheels.

The vehicle 100 can further have a service brake system, which can comprise, for example, brake disks 122-125 with associated brake pads (not shown) arranged on the wheels 118, 119. The contact pressure of the brake pads against the brake discs 122-125 during the generation of braking force is controlled by means of the vehicle control system, e.g. with the help of the control unit 115, which can be arranged so as to send signals to the regulator(s) that regulate the braking force in the service brake system when the driver depresses a brake pedal or indicates in some other way that braking of the vehicle 100 is desired. The vehicle 100 can also comprise a cruise control unit that can generate and send a control signal to brake the vehicle 100.

In some embodiments, the control unit 115 can be arranged so as to control the vehicle service brake system. In other embodiments, it can also be arranged so as to control several of the other vehicle brake systems, where such are present. For example, the vehicle 100 can contain a retarder 126 and/or other supplemental brake systems such as exhaust brakes or engine brakes. Based on, for example, commands issued by the driver, control signals are sent to appropriate system modules to request the desired braking force. The retarder 126 can be arranged so as to interwork with the service brake system, and can be used to relieve the service brake system with a view to reducing wear and the risk of overheating of the brake discs/brake pads 122-125.

The vehicle 100 also comprises a driver cab in which a driver environment with instruments, control devices etc is arranged in the customary manner. This driver environment can also contain a display screen 130 for presenting information to the vehicle driver. For example, according to some embodiments, information related to the shifting of vehicle gears can be presented, such as via a shift schedule or a text/image that informs as to whether or it is possible to shift at present, and the like.

The control system in the vehicle 100 can consist of a communication bus system comprising one or a plurality of communication buses for connecting together a number of electronic control units (ECUs) or control/units/controllers and various components localized on the vehicle 100. Such a control system can comprise a large number of control units, and the responsibility for a specific function can be divided among more than one control unit. Similarly, one control unit can be arranged so as to be responsible for a plurality of functions.

The control unit 115 is in turned arranged so as both to communicate with other units in order to receive signals and measurement values and optionally to trigger a measurement. The control unit 115 is further arranged so as to communicate, for example, via the vehicle communication bus, which can consist of one or a plurality of a cable; a data bus, such as a CAN (Controller Area Network) bus, a MOST (Media Oriented Systems Transport) bus, or some other bus configuration.

According to some embodiments, the control unit 115 can also be arranged for wireless communication over a wireless interface. The wireless interface can consist of a radio transmitter based on wireless communication technology such as 3rd Generation Partnership Project (3GPP), Long Term Evolution (LTE), LTE-Advanced, Evolved Universal Terrestrial Radio Access Network (E-UTRAN), Universal Mobile Telecommunications System (UMTS), Global System for Mobile Communications/ Enhanced Data rate for GSM Evolution (GSM/EDGE), Wideband Code Division Multiple Access (WCDMA), World-Wide Interoperability for Microwave Access (WiMax), Wireless Local Area Network (WLAN), Ultra Mobile Broadband (UMB), Bluetooth (BT), Near field communication (NFC) or an infrared transmitter, to name just a few conceivable examples of wireless communication.

For the sake of simplicity, only one control unit 115 according to Figure 1B above is shown, wherein functions for a plurality of different control functions, such as control of the combustion engine 110, are combined, but the vehicle 100 could, in other embodiments, comprise a plurality of control units, among which the aforesaid control functions could be divided.

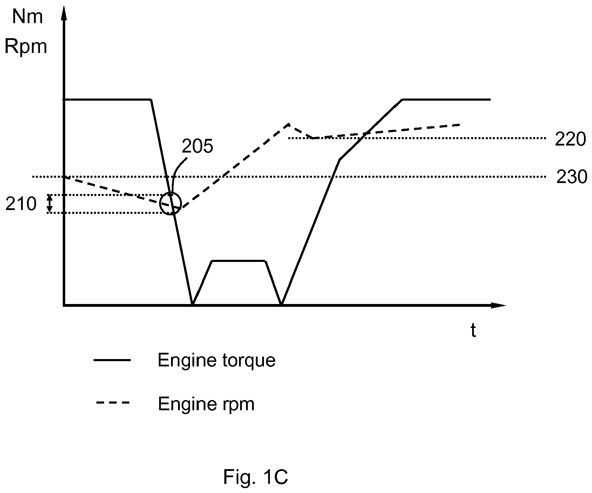

Figure 1C illustrates an example of a change in rpm and torque during a shifting process when a new gear is engaged, as is marked with a circle 205 in the figure. When the engine rpm is determined to lie within a range 210 for shifting to a new gear, sometimes called a shift point, a prediction is made as to what the lowest rpm 220 would be were the shift to a new gear to be performed. A threshold rpm 230 at which the vehicle engine 110 will generate a propulsive force corresponding to the instantaneous running resistance of the vehicle is also calculated.

When, as in the illustrated example, the lowest rpm 220 for the new gear exceeds the threshold rpm 230, the shift can be performed, with an assurance that the propulsive force of the engine will, in the new gear, suffice to overcome the running resistance and thus propel the vehicle 100 forward.

Otherwise, i.e. if the lowest rpm 220 after the shift is lower than the calculated threshold rpm 230, the shift of gears will be suppressed and prevented.

In one alternative embodiment, the shift point 210 can be displaced to an rpm range 210 within which the engine propulsive force after the shift to the new gear will correspond to or exceed the instantaneous running resistance of the vehicle.

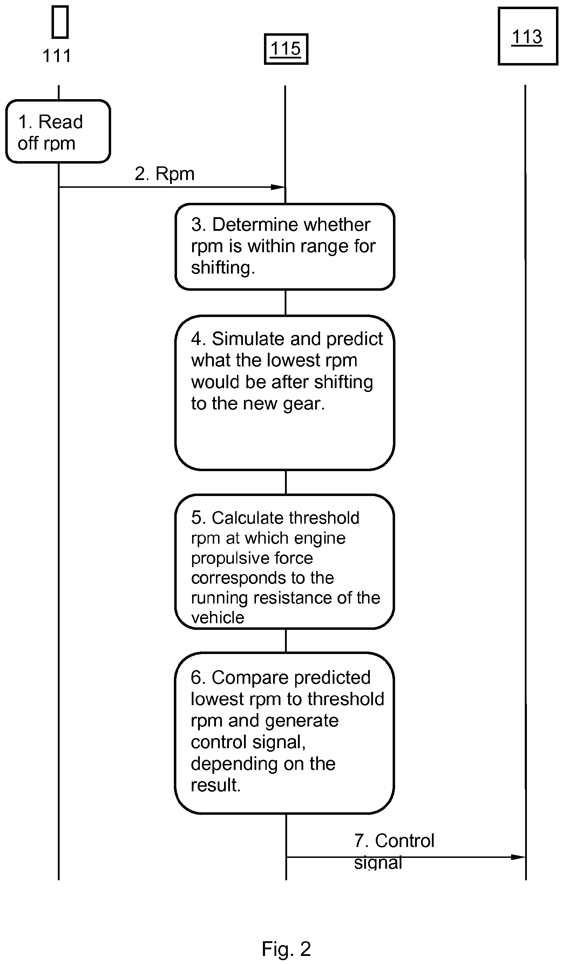

Figure 2 illustrates an exemplary overview of one embodiment of the invention. More specifically, a method for shifting gears of a transmission 113 in a vehicle 100 is illustrated. The method is divided into a number of steps 1-7, which need not necessarily be included in all embodiments of the invention. Furthermore, in some embodiments these steps can be performed in a different order than that indicated by the numbering. Some steps could optionally also be performed in parallel with one another.

In a first step, the rpm can be read off from a sensor 111 and sent to the control unit 115. The control unit 115 can decide whether the read-off value lies within a shifting range 210 for shifting to a new gear. Factors other than rpm can be taken into account in this decision, such as the vehicle velocity, vehicle driving mode, driver behaviors such as the position, position changes and/or rate of position change of controls such as, e.g. the gas pedal.

When it is determined that the rpm is approaching, within or has exceeded the shifting range 210, a prediction can be made as to what the lowest rpm 220 would be after a shift to the new gear was made. Such a prediction can include a simulation of the gear shifting process, based on a calculation. The prediction can also include making an approximation using a value stored in a memory, for example.

Furthermore, the control unit 115 can calculate a threshold rpm 230 at which the vehicle engine 110 will generate a propulsive force corresponding to the running resistance of the vehicle at the time. This running resistance varies over time depending on factors such as the road slope, vehicle load, rolling resistance, air resistance and other driveline losses.

The running resistance F equals the total of the forces acting upon the vehicle 100 from its surroundings, and consists of gravity $F_{grav}$, rolling resistance $F_{roll}$ and air resistance $F_{air}$. In other words:

$$F = F_{grav} + F_{roll} + F_{air} \qquad (1)$$

The gravity $F_{grav}$ is calculated as:

$$F_{grav} = m \cdot g \cdot \sin(\alpha), \qquad (2)$$

where m is the vehicle mass and $\alpha$ the road slope in radians. Because we are dealing mostly with small angles, $\sin(\alpha)$ can be approximated to $\alpha$. The gravitational acceleration g on the surface of the earth can vary between 9.78 and 9.83 $m/s^2$, depending on the position on the globe. In Sweden, gravitational acceleration varies significantly with latitude, from roughly 9.815 $m/s^2$ in the south to 9.824 $m/s^2$ in the north. An approximated value can be set at 9.82 $m/s^2$.

The air resistance can be calculated as a factor k multiplied by the vehicle velocity v squared, as in:

$$F_{Luft} = k \cdot v^2 \qquad (3)$$

where in turn

$$k = \frac{1}{2}\rho \cdot C_d \cdot A \qquad (4)$$

where A is the front area of the vehicle, $C_d$ is the resistance coefficient, which depends on the streamlining of the vehicle, $\rho$ is the air density, which depends on the temperature and ambient humidity, etc, and m is the vehicle mass.

The current rolling resistance $F_{roll}$ can also be calculated.

$$\mathrm{F}_{\mathrm{roll}} = m \cdot g \cdot \sin(\alpha) \cdot C \qquad\qquad (5)$$

where C is a dimensionless rolling resistance coefficient that depends on, for example, the tire pressure, rubber blend in the tires, tread pattern, condition of the roadway, axle configuration, wheel alignment, adjustment of the number of drive shafts and/or support shafts in engagement with a bogie, if present, adjustment of the number of drive shafts and the like. In some cases the rolling resistance C can be approximated at a value between 0.0062 and 0.015.

The force that the engine 110 must generate to overcome the running resistance F can be calculated as the sum of the available engine torque M, which is a function of the limit rpm 230 multiplied by the total gear ratio i and divided by the effective tire radius, $r_{wheel}$. F can then be calculated from:

$$F = \frac{M\ (\omega) \cdot i}{r_{hjul}} \qquad\qquad (6)$$

The threshold rpm 230 can then be isolated and determined by equating equations (1) and (6).

A comparison can then be made between the predicted lowest rpm 220 for the new gear and the calculated threshold rpm 230.

When the predicted lowest rpm 220 equals or exceeds the calculated threshold rpm 230, the control unit 115 can perform the shift to the new gear by sending a control signal to the transmission 113 to engage the new gear.

When the predicted lowest rpm 220 is below the calculated threshold rpm 230, the control unit 115 can then prevent a shift to the new gear being performed.

A shift to a gear in which the rpm and thus the engine torque would be too low to be able to propel the vehicle 100 can thus be prevented. Unsuccessful shifting that results in an engine stall or creeping forward at too high a gear ratio can thus be avoided, thus producing a more reliable vehicle 100 and gear-shifting method for the vehicle 100.

According to some embodiments, the shift point 210 can be moved, e.g. based on the calculated threshold rpm 230.

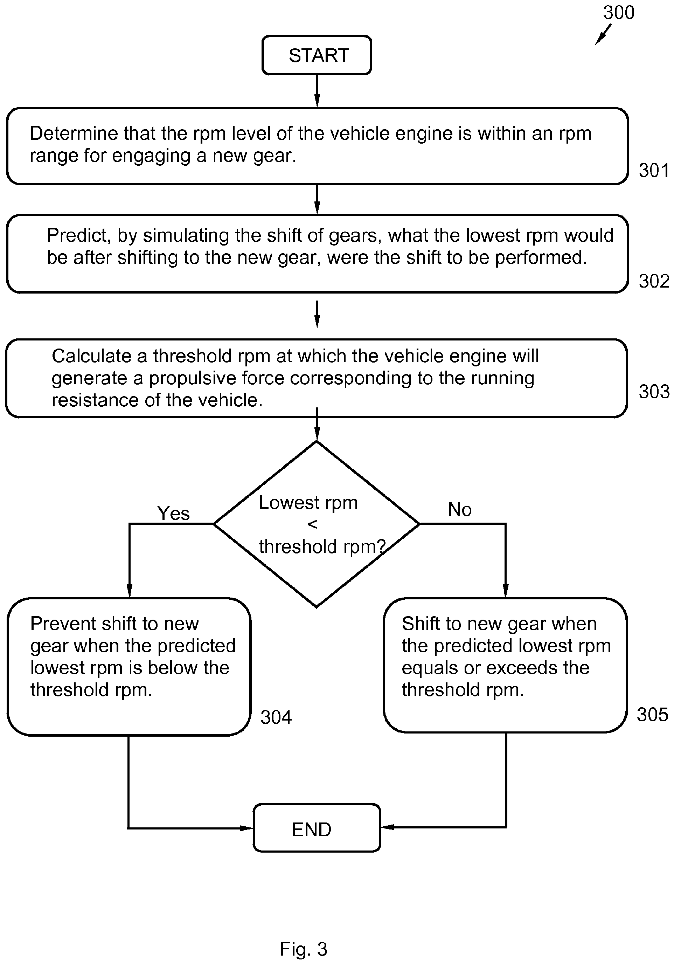

Figure 3 illustrates an example of one embodiment of the invention. The flow diagram in Figure 3 clarifies a method 300 for shifting a transmission 113 in a vehicle 100.

The object of the method 300 is to simulate the shifting of gears and thereby predict what the lowest rpm would be were the shift to actually be performed. By comparing this predicted lowest rpm to a calculated threshold rpm at which the vehicle engine 110 will generate a propulsive force corresponding to the running resistance of the vehicle, a shift to the new gear can be prevented when the predicted lowest rpm is below the calculated threshold rpm. Involuntary engine stalls and improper shifting can be avoided thereby.

To be able to simulate the shifting of gears in the vehicle 100 accurately, the method 300 can comprise a number of steps 301-305. However, it should be noted that some of the steps described here are included only in some alterative embodiments of the invention, such as step 305. Furthermore, the described steps 301-305 can be performed in a chronological order other than that indicated by their numerical order, and some of them can be performed in parallel with one another. The method 300 comprises the following steps:

Step 301

It is determined that the rpm level of the vehicle engine 110 is within an rpm range 210 for engaging a new gear.

Such an rpm range 210 is sometimes called a shift point, and can consist of a given predetermined rpm, or an rpm range 210.

Step 302

The lowest rpm 220, were the shift to the new gear to be performed, is predicted by simulating the shift of gears.

Step 303

A threshold rpm 230 at which the vehicle engine 110 will generate a propulsive force corresponding to the running resistance of the vehicle is calculated.

Step 304

A shift to the new gear is prevented when the predicted 302 lowest rpm 220 is lower than the calculated 303 threshold rpm.

Step 305

This method step can be performed in some embodiments of the method 300.

The shift to the new gear is performed when the predicted 302 lowest rpm 220 equals or exceeds the calculated 303 threshold rpm 230.

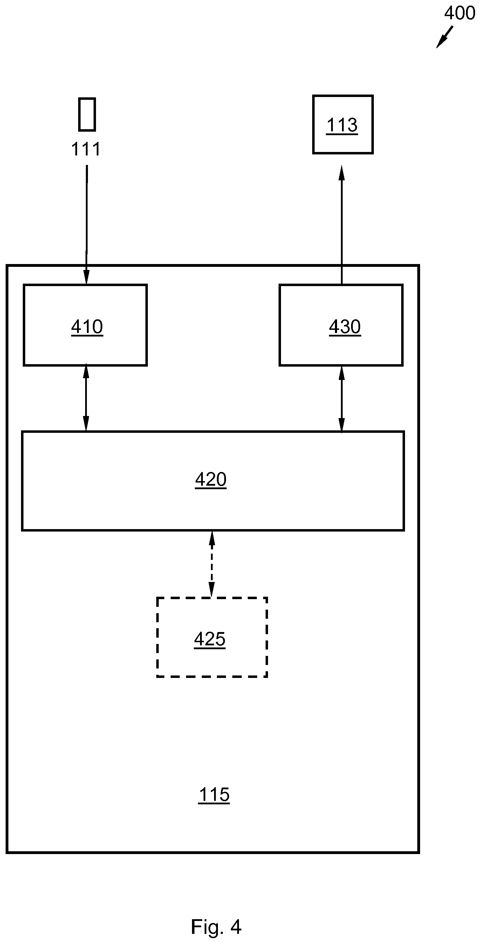

Figure 4 illustrates an embodiment of a control unit 115 arranged so as to control the shifting of gears of a transmission 113 in a vehicle 100.

Said control unit 115 is configured so as to perform at least some of the aforedescribed method steps 301-305 included in the description of the method 300 for simulating the shifting of gears in the vehicle 100. Also a system 400 for shifting a transmission 113 in a vehicle 100, comprising a control unit 115, a transmission 113 and a sensor 111 arranged so as to read off the rpm level of the vehicle engine 110. [sic]

In order to be able to control the shifting of the transmission 113 correctly, the control unit 115 comprises a number of components that are described in detail in the text below. Certain of the described subcomponents appear in some but not necessarily all embodiments. Additional electronics that are not entirely necessary for an understanding of the function of the control unit 115 according to the invention may also be present in the control unit 115.

The control unit 115 comprises a receiving circuit 410 arranged so as to retrieve the instantaneous rpm level of the vehicle engine 110. According to some embodiments, the instantaneous rpm level can be read off by a sensor 111, or rpm transmitter, as it can also be known, and sent to the receiving circuit 410 of the control unit.

The control unit 115 also comprises a processor circuit 420 arranged so as to determine whether the retrieved instantaneous rpm level is within an rpm range 210 for engaging a new gear. The processor circuit 420 is also arranged so as to predict, by simulating the shifting of gears, what the lowest rpm 220 would be after shifting to the new gear, were the shift to be performed. Furthermore, the process circuit 420 is also arranged so as to calculate a threshold rpm 230 at which the vehicle engine 110 will generate a propulsive force corresponding to the running resistance of the vehicle. The processor circuit 420 is further arranged so as to generate a control signal to prevent a shift to the new gear from being performed when the predicted lowest rpm 220 is below the calculated threshold rpm 230.

The processor circuit 420 can consist of, for example, one or a plurality of Central Processing Units (CPUs), microprocessors or other logic designed so as to interpret and carry out instructions and/or to read and write data. The processor circuit 420 can manage data for inflows, outflows or data processing of data, including buffering of data, control functions and the like.

In some embodiments the processor circuit 420 can be arranged so as to generate a control signal to shift to the new gear when the predicted lowest rpm 220 is lower than the calculated threshold rpm 230.

In some embodiments the control unit 115 comprises a memory unit 425, which constitutes a storage medium for data. The memory unit 425 can consist, for example, of a memory card, flash memory, USB memory, hard drive or other similar data-storage unit, such as any of the group comprising ROM (Read-Only Memory), PROM (Programmable Read-Only Memory), EPROM (Erasable PROM), flash memory, EEPROM (Electrically Erasable PROM) etc. in various embodiments.

In some embodiments the memory 425 can be arranged so as to store an rpm range 210 for engaging a new gear, i.e. one or a plurality of shift points.

The control unit 115 also comprises a transmitting circuit 430 arranged so as to transmit a control signal to prevent a shift to the new gear from being performed when the predicted lowest rpm 220 is lower than the calculated threshold rpm 230.

In some embodiments the transmitting circuit 430 can be arranged so as to send a control signal to shift gears when the predicted lowest rpm 220 equals or exceeds the calculated threshold rpm 230.

The invention further comprises a computer program for shifting gears of a transmission 113 in a vehicle 100. The computer program is arranged so as to perform the method 300 according to at least one of the aforedescribed steps 301-305 when the computer program is executed in a processor circuit 420 in the control unit 115.

The method 300 according to the steps 301-305 for shifting gears of a transmission 113 in a vehicle 100 can be implemented by means of one or a plurality of processor circuits 420 in the control unit 115 together with computer program code for performing one, several, certain or all of the steps 301-305 described above. A computer program containing instructions for performing the steps 301-305 when the computer program is loaded into the processor circuit 420 can thus be [sic].

Some embodiments of the invention also comprise a vehicle 100 that contains the aforedescribed system 400.

## Claims

1. A method (300) for shifting gears of a transmission (113) in a vehicle (100), comprising the following steps:

   determining (301) that the rpm level of the vehicle engine (110) lies within an rpm range (210) for engaging a new gear,
   predicting (302), by simulating the shift of gears, what the lowest rpm (220) would be after shifting to the new gear, were the shift of gears to be performed,
   calculating (303) a threshold rpm (230) at which the vehicle engine (110) will generate a propulsive force corresponding to the running resistance of the vehicle, and
   preventing (304) a shift to the new gear when the predicted (302) lowest rpm (220) is below the calculated (303) threshold rpm (230).

2. The method (300) according to claim 1, further comprising
   shifting (305) to the new gear when the predicted (302) lowest rpm (220) equals or exceeds the calculated (303) threshold rpm (230).

3. A control unit (115) arranged so as to control the shifting of gears of a transmission (113) in a vehicle (100), comprising:

   a receiving circuit (410) arranged so as to retrieve an instantaneous rpm level of the vehicle engine (110),
   a processor circuit (420) arranged so as to determine that the retrieved instantaneous rpm level lies within an rpm range (210) for engaging a new gear, and arranged so as to predict, by simulating the shift of gears, what the lowest rpm (220) would be after shifting to the new gear were the shift to be performed, and further arranged so as to calculate a threshold rpm (230) at which the vehicle engine (110) will generate a propulsive force corresponding to the running resistance of the vehicle, and also arranged so as to generate a control signal to prevent a shift to the new gear from being performed when the predicted lowest rpm (220) is lower than the calculated threshold rpm (230), **characterised by**
   a transmitting circuit (430) arranged so as to transmit a control signal for preventing a shift to the new gear from being performed when the predicted lowest rpm (220) is below the calculated threshold rpm (230).

4. The control unit (115) according to claim 3, wherein
   the processor circuit (420) is arranged so as to generate a control signal for shifting to the new gear when the predicted lowest rpm (220) equals or exceeds the calculated threshold rpm (230), and
   the transmitting circuit (430) is arranged so as to send a control signal for shifting when the predicted lowest rpm (220) equals or exceeds the calculated threshold rpm (230).

5. The control unit (115) according to any of claims 3-4, comprising
   a memory (425) arranged so as to store an rpm range (210) for engaging a new gear.

6. A computer program for shifting of gears of a transmission (113) in a vehicle (100), comprising: performance of the method (300) according to any of claims 1-2 when the computer program is executed in a processor circuit (420) in a control unit (115) according to any of claims 3-5.

7. A system (400) for shifting of gears of a transmission (113) in a vehicle (100), comprising:

   a control unit (115) according to any of claims 3-5,
   a sensor (111) arranged so as to read off the rpm level of the vehicle engine (110),
   a transmission (113) in the vehicle (100).

8. A vehicle (100) containing a system (400) according to claim 7.

## Patentansprüche

1. Verfahren (300) zum Wechseln von Gängen eines Getriebes (113) in einem Fahrzeug (100), umfassend die folgenden Schritte:

   Feststellen (301), dass das Drehzahlniveau des Fahrzeugmotors (110) in einem Drehzahlbereich (210) zum Einlegen eines neuen Gangs liegt,

Vorhersagen (302), durch Simulieren des Gangwechsels, welches die niedrigste Drehzahl (220) nach Wechseln in den neuen Gang wäre, falls der Gangwechsel ausgeführt würde,

Berechnen (303) einer Schwellenwertdrehzahl (230), bei der der Fahrzeugmotor (110) eine dem Fahrwiderstand des Fahrzeugs entsprechende Vortriebskraft erzeugen wird, und

Verhindern (304) eines Schaltens in den neuen Gang, wenn die vorhergesagte (302) niedrigste Drehzahl (220) unter der berechneten (303) Schwellenwertdrehzahl (230) liegt.

2. Verfahren (300) nach Anspruch 1, ferner umfassend

Schalten (305) in den neuen Gang, wenn die vorhergesagte (302) niedrigste Drehzahl (220) gleich oder größer ist als die berechnete (303) Schwellenwertdrehzahl (230).

3. Steuereinheit (115), die dazu angeordnet ist, das Wechseln von Gängen eines Getriebes (113 in einem Fahrzeug (100) zu steuern, mit:

einem Empfangsschaltkreis (410), der dazu angeordnet ist, ein momentanes Drehzahlniveau des Fahrzeugmotors (110) abzufragen,

einem Verarbeitungsschaltkreis (420), der dazu angeordnet ist festzustellen, dass das abgefragte momentane Drehzahlniveau innerhalb eines Drehzahlbereichs (210) zum Einlegen eines neuen Gangs liegt, und dazu angeordnet ist vorherzusagen, durch Simulieren des Gangwechsels, welches die niedrigste Drehzahl (220) nach einem Schalten in den neuen Gang wäre, wenn der Wechsel ausgeführt würde, und ferner dazu angeordnet ist, eine Schwellenwertdrehzahl (230) zu berechnen, bei der der Fahrzeugmotor (110) eine dem Fahrwiderstand des Fahrzeugs entsprechende Vortriebskraft erzeugen wird, und auch dazu angeordnet ist, ein Steuersignal zu erzeugen zum Verhindern, dass ein Schalten in den neuen Gang ausgeführt wird, wenn die vorhergesagte niedrigste Drehzahl (220) niedriger ist als die berechnete Schwellenwertdrehzahl (230),

**gekennzeichnet durch**

einen Sendeschaltkreis (430), der dazu angeordnet ist, ein Steuersignal zu senden zum Verhindern, dass ein Schalten in den neuen Gang ausgeführt wird, wenn die vorhergesagte niedrigste Drehzahl (220) kleiner ist als die berechnete Schwellenwertdrehzahl (230).

4. Steuereinheit (115) nach Anspruch 3, bei der

der Verarbeitungsschaltkreis (420) dazu angeordnet ist, ein Steuersignal zum Schalten in den neuen Gang zu erzeugen, wenn die vorhergesagte niedrigste Drehzahl (220) gleich oder größer ist als die berechnete Schwellenwertdrehzahl (230), und

der Sendeschaltkreis (430) dazu angeordnet ist, ein Steuersignal zum Schalten zu senden, wenn die vorhergesagte niedrigste Drehzahl (220) gleich oder größer ist als die berechnete Schwellenwertdrehzahl (230).

5. Steuereinheit (115) nach einem der Ansprüche 3 bis 4, mit

einem Speicher (425), der zum Speichern eines Drehzahlbereichs (210) zum Einlegen eines neuen Gangs eingerichtet ist.

6. Computerprogramm zum Wechseln von Gängen eines Getriebes (113) in einem Fahrzeug (100), umfassend: Ausführung des Verfahrens (300) nach einem der Ansprüche 1 bis 2, wenn das Computerprogramm in einem Verarbeitungsschaltkreis (220) in einer Steuereinheit (115) gemäß einem der Ansprüche 3 bis 5 ausgeführt wird.

7. System (400) zum Wechseln von Gängen eines Getriebes (113) in einem Fahrzeug (100), umfassend:

eine Steuereinheit (115) nach einem der Ansprüche 3 bis 5,

einen Sensor (111), der dazu angeordnet ist, das Drehzahlniveau des Fahrzeugmotors (110) abzulesen,

ein Getriebe (113) in dem Fahrzeug (100).

8. Fahrzeug (100) mit einem System (400) nach Anspruch 7.

**Revendications**

1. Procédé (300) pour le changement de vitesse d'une transmission (113) dans un véhicule (100), comprenant les étapes suivantes :

la détermination (301) que le niveau de régime du moteur du véhicule (110) se trouve dans une plage de régime (210) pour l'engagement d'une nouvelle vitesse,

la prédiction (302), par la simulation du changement de vitesse, de quel serait le régime le plus bas (220) après le changement vers la nouvelle vitesse, si le changement de vitesse doit être effectué,

le calcul (303) d'un régime seuil (230) auquel le moteur du véhicule (110) générera une force de propulsion correspondant à la résistance de marche du véhicule, et

l'empêchement (304) d'un changement vers la nouvelle vitesse lorsque le régime le plus bas (220) prédit (302) est inférieur au régime seuil (230) calculé (303).

2.  Procédé(300) selon la revendication 1, comprenant en outre
le changement (305) vers la nouvelle vitesse lorsque le régime le plus bas (220) prédit (302) est égal ou supérieur au régime seuil (230) calculé (303).

3.  Unité de commande (115) agencée afin de commander le changement de vitesses d'une transmission (113) dans un véhicule (100), comprenant :

un circuit de réception (410) agencé afin de récupérer un niveau de régime instantané du moteur du véhicule (110),

un circuit de processeur (420) agencé afin de déterminer que le niveau de régime instantané récupéré se situe dans une plage de régime (210) pour l'engagement d'une nouvelle vitesse, et agencé afin de prédire, par la simulation du changement de vitesse, quel serait le régime le plus bas (220) après le changement à la nouvelle vitesse si le changement doit être effectué, et en outre agencé afin de calculer un régime seuil (230) auquel le moteur du véhicule (110) générera une force de propulsion correspondant à la résistance de marche du véhicule, et également agencé afin de générer un signal de commande pour empêcher qu'un changement vers la nouvelle vitesse soit effectué lorsque le régime le plus bas (220) prédit est inférieur au régime seuil (230) calculé, **caractérisé en ce que**

un circuit de transmission (430) agencé afin de transmettre un signal de commande pour l'empêchement d'un changement vers la nouvelle vitesse soit effectué lorsque le régime le plus bas (220) prédit est inférieur au régime seuil (230) calculé.

4.  Unité de commande (115) selon la revendication 3, dans laquelle
le circuit du processeur (420) est agencé afin de générer un signal de commande pour le changement vers la nouvelle vitesse lorsque le régime le plus bas (220) prédit est égal ou supérieur au régime seuil (230) calculé, et
le circuit de transmission (430) est agencé afin d'envoyer un signal de commande pour le changement lorsque le régime le plus bas (220) prédit est égal ou supérieur au régime seuil (230) calculé.

5.  Unité de commande (115) selon l'une quelconque des revendications 3-4, comprenant
une mémoire (425) agencée afin de stocker une plage de régime (210) pour l'engagement d'une nouvelle vitesse.

6.  Programme informatique pour le changement de vitesse d'une transmission (113) dans un véhicule (100), comprenant : la performance du procédé (300) selon l'une quelconque des revendications 1-2 lorsque le programme informatique est exécuté dans un circuit de processeur (420) dans une unité de commande (115) selon l'une quelconque des revendications 3-5.

7.  Système (400) pour le changement de vitesses d'une transmission (113) dans un véhicule (100), comprenant :

une unité de commande (115) selon l'une quelconque des revendications 3-5,
un capteur (111) agencé afin de lire le niveau de régime du moteur du véhicule (110),
une transmission (113) dans le véhicule (100).

8.  Véhicule (100) contenant un système (400) selon la revendication 7.

105

100

α

Fig. 1A

100

118

122

124

116

111 114

126

120

110

113

121

112

115

130

117

123

125

119

Fig. 1B

Fig. 1C

111

115

113

1. Read off rpm

2. Rpm

3. Determine whether rpm is within range for shifting.

4. Simulate and predict what the lowest rpm would be after shifting to the new gear.

5. Calculate threshold rpm at which engine propulsive force corresponds to the running resistance of the vehicle

6. Compare predicted lowest rpm to threshold rpm and generate control signal, depending on the result.

7. Control signal

Fig. 2

300

START

Determine that the rpm level of the vehicle engine is within an rpm range for engaging a new gear.

301

Predict, by simulating the shift of gears, what the lowest rpm would be after shifting to the new gear, were the shift to be performed.

302

Calculate a threshold rpm at which the vehicle engine will generate a propulsive force corresponding to the running resistance of the vehicle.

303

Lowest rpm < threshold rpm?

Yes

No

Prevent shift to new gear when the predicted lowest rpm is below the threshold rpm.

304

Shift to new gear when the predicted lowest rpm equals or exceeds the threshold rpm.

305

END

Fig. 3

400

111

113

410

430

420

425

115

Fig. 4

**REFERENCES CITED IN THE DESCRIPTION**

**Patent documents cited in the description**

- US 20060155450 A1